# EUROPEAN PATENT APPLICATION

(11) **EP 4 431 336 A1**
(43) Date of publication of application: **18.09.2024**
(21) Application number: 22893177.0
(22) Date of filing: 09.11.2022
(51) Int. Cl.: B60N 3/10, F04D 25/08, F25D 31/00, F25B 21/02

(54) **MOVABLE TRAY AND VEHICLE REFRIGERATOR HAVING SAME**

(30) Priority: 12.11.2021 US 202163278600 P; 27.10.2022 KR 20220139905
(71) Applicant: LG Electronics Inc., Yeongdeungpo-gu Seoul 07336 (KR)
(72) Inventor: CHO, Jaehoon, Seoul 06772 (KR); YOUN, Je Kwang, Seoul 06772 (KR); CHO, Sung Il, Seoul 06772 (KR); PARK, Juhyeon, Seoul 06772 (KR); KWON, Boan, Seoul 06772 (KR)
(74) Representative: Vossius & Partner Patentanwälte Rechtsanwälte mbB
(86) International application number: PCT/KR2022/017526
(87) International publication number: WO 2023/085757

(57) **Abstract**

The present invention relates to a movable tray and a vehicle refrigerator having same. The movable tray according to the present invention comprises: a housing unit provided with an air passage for heat exchange; a refrigerated storage unit which is fixed inside the housing unit and in which beverage containers are loaded; a cooling module unit which is installed between the bottom of the refrigerated storage unit and the housing unit and cools the refrigerated storage unit by means of the Peltier effect; and a battery unit which is installed inside the housing unit and supplies power to the cooling module unit.

## Description

### [Technical Field]

The present disclosure relates to a movable tray and a vehicle refrigerator having the same, and in particular, a movable tray enabling a beverage container to be stored in a refrigerator provided in a vehicle and carrying a beverage container in the state of being stored in the tray together and a vehicle refrigerator having the same.

### [Background Art]

Ordinarily, vehicles are transportation means that are provided with a prime mover powered by gasoline or light oil, and rotate wheels by using the power of the prime mover to run on a road. A vehicle is provided with a plurality of seats, and a refrigerator may be installed inside the vehicle.

Refrigerators store food items or medicines at low temperature, to keep them cold or prevent them from decaying. In recent years, a refrigerator is installed inside a vehicle, to meet the customer's needs.

A conventional vehicle refrigerator cools beverages or food items based on the Peltier effect. The Peltier effect means that in the case where two different sorts of metals are joined, and electric current passes through the metals, heat is generated and absorbed in proportion to the electric current at a joined portion between the metals.

In the case where electric current is applied reversely, heat is absorbed and generated reversely. In the case where a N-type semiconductor and a P-type semiconductor are arranged alternately and cooled or heated based on the Peltier effect, there may be a difference of about 40 °C in temperature. With a thermoelectric semiconductor element, a vehicle refrigerator or a cooling and heating cabinet may be provided.

However, in the case where a beverage container and the like is stored in a conventional vehicle refrigerator, it is difficult to take out a plurality of beverage containers from the vehicle refrigerator and move them.

Additionally, in the case where a plurality of beverage containers are put into a tray and moved, since an additional cooling device is not provided in the tray, the temperature of the plurality of beverage containers refrigerated increases.

Further, in the case where a tray in which a beverage container is stored is mounted inside a vehicle refrigerator, cold air of the vehicle refrigerator is not delivered to the beverage container inside the tray.

As a related art, a refrigerator of a vehicle is disclosed in KR Patent No. 10-0845153 (registered on July 03, 2008), the subject matter of which is incorporated herein by reference.

### [Description of the Invention]

### [Technical Problems]

The objective of the present disclosure is to provide a movable tray that can carry a plurality of beverage containers in the state where the plurality of beverage containers is refrigerated, and a vehicle refrigerator having the same.

The objective of the present disclosure is to provide a movable tray in which a tray for containing and carrying a plurality of beverage containers is provided with an additional cooling device that keeps the beverage containers cold, and a vehicle refrigerator having the same.

The objective of the present disclosure is to provide a movable tray that can readily supply cold air of a vehicle refrigerator to a tray in which a beverage container is stored, and a vehicle refrigerator having the same.

The objective of the present disclosure is to provide a movable tray from which a beverage container refrigerated can be readily drawn even in a small space, and a vehicle refrigerator having the same.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

A movable tray and a vehicle refrigerator having the same according to the present disclosure provide a refrigerating device that can carry a plurality of beverage containers in the state where the plurality of beverage containers can be refrigerated.

Specifically, a cooling module unit is installed in a movable tray for carrying a plurality of beverage containers and cools the beverage containers, such that the beverages containers remains refrigerated. Additionally, an additional cooling unit is installed in a vehicle refrigerator mounted on a seat of a vehicle, and cools the beverage containers mounted in the movable tray, such that the beverage containers are kept cool.

According to the present disclosure, the plurality of beverage containers stored in the movable tray can be kept refrigerated while the plurality of beverage containers are moved together with the movable tray.

Specifically, a battery unit and the cooling module unit are installed in the movable tray to cool a refrigerated storage unit in which a beverage container is mounted, such that the beverage container stored in the movable tray is kept cold.

According to the present disclosure, cold air of the vehicle refrigerator is readily supplied to the tray in which a beverage container is stored.

Specifically, a plurality of holes for cold air to move is formed at a movable body unit of the vehicle refrigerator, and a plurality of holes for cold to move is formed at the movable tray facing the movable body unit, such that cold air moves readily.

According to the present disclosure, a beverage container is moved and drawn from the vehicle refrigerator in an oblique direction, such that the beverage container is readily drawn even in a small space.

Specifically, a container storage unit in which a beverage container is mounted inclines in one direction, and the beverage container is drawn from the upper side of the movable body unit, in an oblique direction, in the state where the movable body unit moves forward to the outside of a fixed body unit, such that the beverage container does not interfere with another component.

A movable tray according to the present disclosure comprises a housing unit provided with a passage in which air moves for heat exchange, a refrigerated storage unit which is fixed to the inside of the housing unit and in which a beverage container is mounted, a cooling module unit installed between a bottom of the refrigerated storage unit and the housing unit, and configured to cool the refrigerated storage unit based on a Peltier effect, and a battery unit installed inside the housing unit, and configured to provide a power source to the cooling module unit.

The beverage container is stored in or drawn from the refrigerated storage unit in the state where the beverage container inclines to one side.

The housing unit comprises an outer housing which is shaped into a case the upper side of which is open, and in which the refrigerated storage unit and the cooling module unit and the battery unit are installed, and a cover housing configured to cover the upper side of the refrigerated storage unit and fixed to the upper side of the outer housing.

The outer housing has a first vent hole part that is a passage for air for cooling the cooling module unit to move, respectively at both sides thereof, in the widthwise direction thereof.

The refrigerated storage unit comprises a container storage unit shaped into a cylinder the upper side of which is open to store the beverage container, and a storage connecting unit configured to connect the container storage unit provided in a plurality of numbers.

Further, a central line of the container storage unit forms an acute angle with respect to a vertical line, and is installed in an inclined shape.

The cooling module unit comprises a cooling element installed in contact with a container lower surface of the container storage unit, and configured to cool the container storage unit based on the Peltier effect, and a first heat dissipating unit installed at a position where the first heat dissipating unit and the container storage unit face each other with the cooling element therebetween, and configured to receive heat of the cooling element and to induce heat exchange with air, and a cooling fan installed in succession to the first heat dissipating unit, and configured to guide a flow of air toward the first heat dissipating unit.

The first heat dissipating unit comprises a heat dissipating plate installed at a slant, in contact with the lower side of the cooling element, together with the lower surface, and a heat dissipating fin configured to protrude to the lower side of the heat dissipating plate, and to exchange heat with air.

The heat dissipating fin is installed in a plurality of numbers, the plurality of heat dissipating fins is installed in succession from one side of the heat dissipating plate to the other side thereof, and a length at which the heat dissipating fin protrudes increases gradually from one side of the heat dissipating plate to the other side thereof.

According to the present disclosure, the movable tray further comprises a handle unit fixed to the inside of the housing unit, and provided with a handle moving in an up-down direction.

A vehicle refrigerator according to the present disclosure comprises a fixed body unit fixed to a vehicle, and configured to have a shape in which both sides of the fixed body unit are open in the lengthwise direction thereof, a movable body unit stored inside the fixed body unit or drawn out of the fixed body unit in a sliding manner, and configured to generate cold air and to cool a beverage container, and a movable tray in which a plurality of beverage containers is mounted at a slant, which is detachably installed at the movable body unit, and which generates cold air cooling the beverage container and cools the beverage container.

The fixed body unit comprises a fixed case which is shaped into a square pipe, and in which the movable body unit is slidably installed, and a first side heat dissipating hole part comprised of a plurality of holes for air to move, at both sides of the fixed case in the widthwise direction thereof.

The movable body unit comprises a movable case inserted into the fixed case, and moved in the lengthwise direction of the fixed case, a second side heat dissipating hole part configured to form a hole for air to move, at the movable case installed at a position where the movable case faces the first side heat dissipating hole part, in the state where the movable case is stored inside the fixed case, a cooling unit fixed to the inside of the movable case, and configured to generate cold air by using electric energy, and a mounting unit configured to form a concave groove for mounting the movable tray, at the upper side of the movable case, and to receive cold air generated from the cooling unit.

The cooling unit comprises a thermoelectric module disposed at the inner side of the movable case, facing the mounting unit, and cooled based on the Peltier effect, a second heat dissipating unit disposed between the mounting unit and the thermoelectric module, and configured to receive heat of the thermoelectric module and to induce heat exchange with air, a third heat dissipating unit installed at a position where the third heat dissipating unit and the second heat dissipating unit face each other with the thermoelectric module therebetween, and configured to receive heat of the thermoelectric module and to induce heat exchange with air, an air blowing fan disposed between the second heat dissipating unit and the mounting unit, and configured to move air form the mounting unit toward the second heat dissipating unit, and a heat dissipating fan installed in succession to the third heat dissipating unit, and configured to move air toward the third heat dissipating unit.

The mounting unit comprises a mounting case disposed inside the movable case, and configured to form a groove that is concave upward to accommodate the movable tray.

The mounting case is provided with a plurality of holes for receiving cold air generated from the cooling unit.

The mounting case comprises a second side hole part configured to form a plurality of holes at a position where the mounting case faces the cooling unit, and to form a passage for air inside the mounting case to move to the cooling unit, a first side hole part configured to form a plurality of holes at the upper side of the second side hole part, and to form a passage for air cooled in the cooling unit to move to the inside of the mounting case, and a third side hole part configured to form a plurality of holes at the lower side of the second side hole part, and to form a passage for air cooled in the cooling unit to move to the inside of the mounting case.

According to the present disclosure, the vehicle refrigerator further comprises a linearly movable unit configured to connect to the fixed body unit and the movable body unit, and to move the movable body unit to the outside of the fixed body unit by using electric energy.

The linearly movable unit comprises a driving motor fixed to the fixed body unit, and configured to generate rotational power by using electric energy, a driving gear configured to connect to the driving motor and to rotate based on an operation of the driving motor, a belt member held at the driving gear, and configured to move based on a rotation of the driving gear, a driven gear rotatably installed at a position where the driven gear is spaced from the driving gear, and configured to connect to the belt member, and a belt fixing unit fixed to the movable body unit and the belt member, and configured to move the movable body unit, together with the belt member.

According to the present disclosure, the vehicle refrigerator comprises a side rail fixed to the inside of the fixed body unit, and configured to extend along a path in which the movable body unit moves, and a rail holder installed on a lateral surface of the movable body unit, which faces the side rail, and configured to move along the side rail.

The movable tray comprises a housing unit provided with a passage in which air moves for heat exchange, a refrigerated storage unit which is fixed to the inside of the housing unit, and in which a beverage container is mounted, a cooling module unit installed between the bottom of the refrigerated storage unit and the housing unit, and configured to cool the refrigerated storage unit based on the Peltier effect, and a battery unit installed inside the housing unit, and configured to supply a power source to the cooling module unit.

The housing unit comprises an outer housing which is a case the upper side of which is open, and in which the refrigerated storage unit and the cooling module unit and the battery unit are installed, and a cover housing configured to cover the upper side of the refrigerated storage unit, and fixed to the upper side of the outer housing.

The outer housing comprises a first vent hole part as a passage for air for cooling the cooling module unit to move installed respectively at both sides of the outer housing in the widthwise direction thereof, and a second vent hole part configured to form a plurality of holes in a direction where a cooling unit of the movable body unit is installed.

The refrigerated storage unit comprises a container storage unit shaped into a cylinder the upper side of which is open to accommodate the beverage container, and a storage connecting unit configured to connect the container storage unit provided in a plurality of numbers.

### [Advantageous Effects]

A movable tray and a vehicle refrigerator having the same, according to the present disclosure, use cold air generated respectively from the vehicle refrigerator and the movable tray to cool a beverage container, leading to a decrease in time taken to cool the beverage container.

According to the present disclosure, a beverage container is kept refrigerated inside and outside a vehicle, ensuring improvement in user satisfaction.

According to the present disclosure, cold air generated from a movable body unit is delivered to the movable tray through a plurality of holes to cool a beverage container, leading to a decrease in time taken to cool the beverage container.

According to the present disclosure, a beverage container is moved and drawn out of the vehicle refrigerator in an oblique direction, enabling a beverage container to be drawn readily even in a small space.

Specific effects are described along with the above-described effects, in the section of detailed description.

### [Brief Description of the Drawings]

FIG. 1 is a perspective view showing a movable tray of one embodiment.
FIG. 2 is a front view showing the movable tray of one embodiment.
FIG. 3 is a perspective view showing that a handle unit of the movable tray of one embodiment moves up.
FIG. 4 is a perspective view showing the lower side of the movable tray of one embodiment.
FIG. 5 is a front view showing a refrigerated storage unit and a cooling module unit of one embodiment.
FIG. 6 is a perspective view showing the cooling module unit of one embodiment.
FIG. 7 is a perspective view showing the refrigerated storage unit and a cooling element of one embodiment.
FIG. 8 is a cross-sectional view showing the movable tray of one embodiment.
FIG. 9 is a perspective view showing the handle unit of one embodiment.
FIG. 10 is an exploded perspective view showing the handle unit of one embodiment.
FIG. 11 is a perspective view showing a state in which a movable body unit moves forward from a vehicle refrigerator of one embodiment.
FIG. 12 is a perspective view showing the vehicle refrigerator of one embodiment.
FIG. 13 is a cross-sectional view showing the vehicle refrigerator of one embodiment.
FIG. 14 is a plan view showing the movable body unit of one embodiment.
FIG. 15 is a side view showing the movable body unit of one embodiment.
FIG. 16 is a lateral cross-sectional view showing the movable body unit of one embodiment.
FIG. 17 is a cross-sectional view showing a cooling unit of one embodiment.
FIG. 18 is a planar cross-sectional view showing the movable body unit of one embodiment.
FIG. 19 is a perspective view showing a linearly movable unit of one embodiment.
FIG. 20 is a perspective view showing a side rail and a rail holder of one embodiment.

### [Detailed Description of Exemplary Embodiments]

The above-described aspects, features and advantages are specifically described hereinafter with reference to accompanying drawings such that one having ordinary skill in the art to which the subject matter of the present disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague.* Hereinafter, preferred embodiments according to the disclosure are specifically described with reference to the accompanying drawings. In the drawings, identical reference numerals may denote identical or similar components.

The terms "first", "second" and the like are used herein only to distinguish one component from another component, but the components are not to be limited by the terms. Certainly, a first component may be a second component, unless stated to the contrary.

When any one component is described as being "in the upper portion (or the lower portion)" or "on (or under)" another component, any one component may be directly on (or under) another component, and an additional component may be interposed between the two components.

When any one component is described as being "connected", "coupled" or "connected" to another component, any one component may be directly connected or coupled to another component, but an additional component may be "interposed" between the two components, or the two components may be "connected", "coupled" or "connected" by an additional component.

Throughout the disclosure, each component may be provided as a single one or a plurality of ones, unless stated otherwise.

In the disclosure, singular forms include plural forms as well, unless explicitly indicated otherwise. In the disclosure, the terms "comprised of', "comprise", and the like do not imply necessarily including stated components or stated steps, and imply excluding some of the stated components or stated steps or including additional components or additional step.

Throughout the disclosure, the terms "A and/or B" as used herein may denote A, B or A and B, and the terms "C to D" may denote C or greater and D or less, unless stated to the contrary.

Hereinafter, a movable tray 1 and a vehicle refrigerator 100 having the same of one embodiment are described.

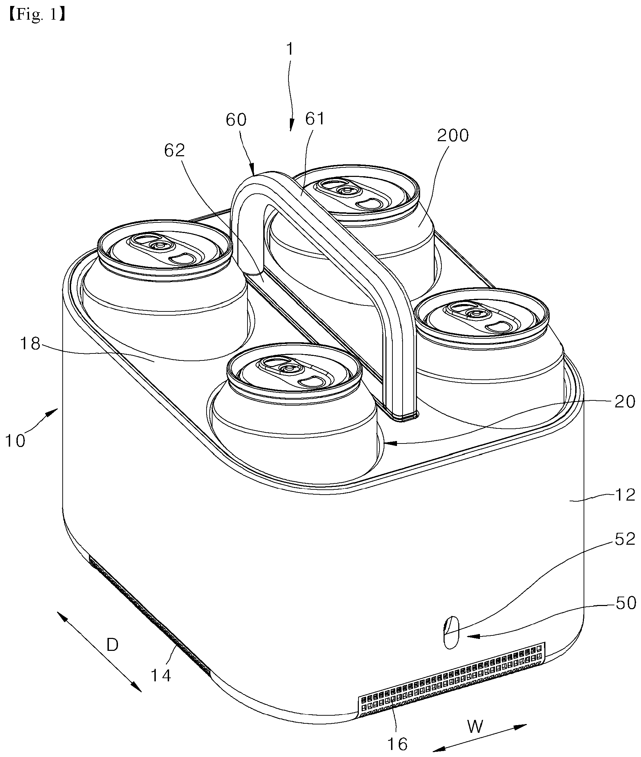

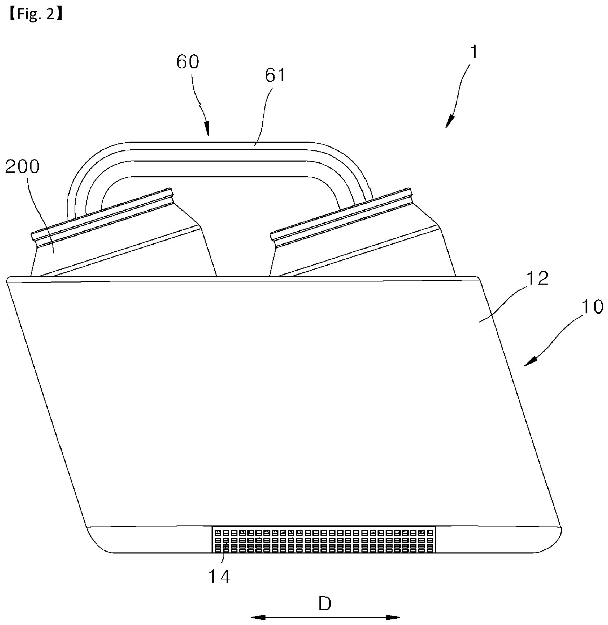

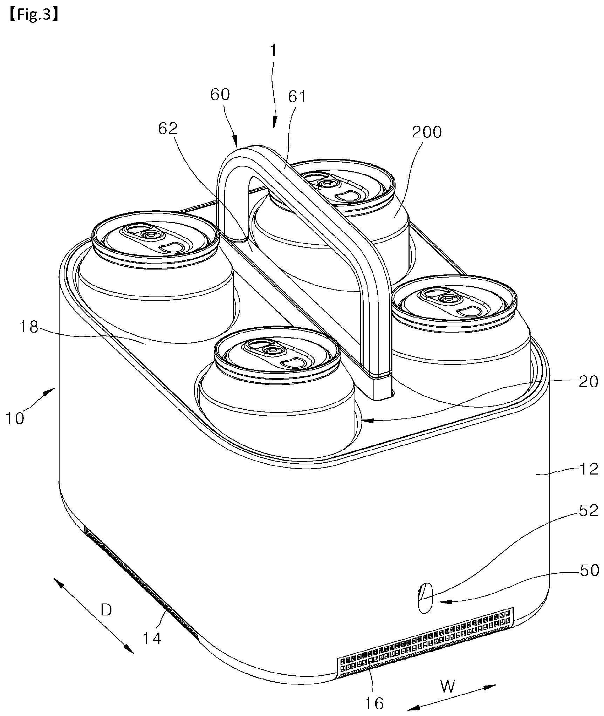

FIG. 1 is a perspective view showing a movable tray 1 of one embodiment, FIG. 2 is a front view showing the movable tray 1 of one embodiment, and FIG. 3 is a perspective view showing that a handle unit 60 of the movable tray 1 of one embodiment moves up.

As illustrated in FIG. 1 to FIG. 3, the movable tray 1 of one embodiment is provided with a refrigerated storage unit 20 for carrying a plurality of beverage containers 200, and provided with an additional cooling device to cool the beverage containers 200, thereby keeping the beverage containers 200 refrigerated.

The movable tray 1 on which the plurality of beverage containers 200 is mounted is detachably installed inside a vehicle refrigerator 100 described hereinafter. Accordingly, the beverage containers 200 are cooled by a cooling device provided at the vehicle refrigerator 100, such that the beverage containers 200 remain refrigerated in a vehicle.

To be readily put into and out of the vehicle refrigerator 100, the movable tray 1 moves up in an oblique direction. Since the movable tray 1 is attached to and detached from the vehicle refrigerator 100 by moving in an oblique direction, the exterior of the housing unit 10 of the movable tray 1 inclines to one side. Additionally, a mounting case 160 provided in the vehicle refrigerator 100 has a groove that inclines in the same direction as the moveable tray 1.

### [Movable tray]

A cooling module unit 30 is installed inside the movable tray 1 that operates based on the Peltier effect. A cooling element 32 provided in the cooling module unit 30 is a thermoelectric module 142 operating based on the Peltier effect, and when necessary, performs a heating operation or a cooling operation.

The cooling module unit 30 is operated by a battery unit 40 built into the movable tray 1, and heat generated from the cooling module unit 30 is discharged out of the housing unit 10.

The movable tray 1 of one embodiment accommodates a plurality of beverage containers 200 at a slant. Additionally, the movable tray 1 is detachably installed in an oblique direction in the movable body unit 120 of the vehicle refrigerator 100 described hereinafter, and is modifiable in various different forms within the technical scope where the movable tray 1 generates cold air cooling the beverage container 200 to cool the beverage container 200.

The movable tray 1 comprises a battery unit 40 and a cooling module unit 30, and cools the refrigerated storage unit 20 in which the beverage container 20 is mounted, based on an operation of the cooling module unit 30, thereby keeping the beverage container 200 stored in the movable tray 1 cool.

The movable tray 1 of one embodiment comprises a housing unit 10, a refrigerated storage unit 20, a cooling module unit 30, a battery unit 40, a power source terminal unit 50, a handle unit 60 and a handle supporter 70.

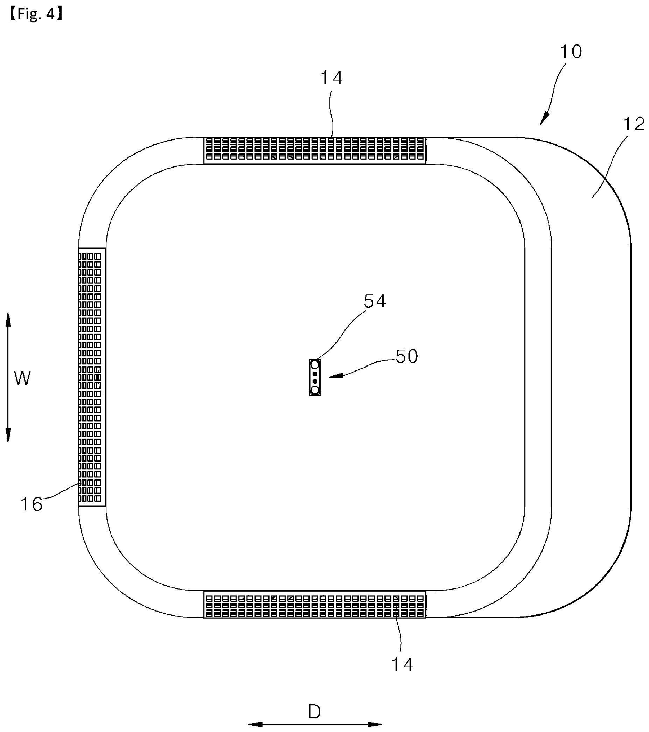

FIG. 4 is a perspective view showing the lower side of the movable tray 1 of one embodiment.

As illustrated in FIG. 3 and FIG. 4, the housing unit 10 forms the exterior of the movable tray 1, and is modifiable in various different forms within the technical scope where the housing unit 10 is provided with a passage through which air moves for heat exchange. The housing unit 10 of one embodiment comprises an outer housing 12 and a cover housing 18.

The outer housing 12 is shaped into a case the upper side of which is open, and has the refrigerated storage unit 20, the cooling module unit 30 and the battery unit 40 therein. The outer housing 12 is installed in such a way that the outer housing 12 inclines to one side together with the refrigerated storage unit 20.

The vehicle refrigerator 100 is installed in a relatively small space at the lower side of a seat of a vehicle. Accordingly, in the case where the movable tray 1 stored in the vehicle refrigerator 100 is moved up perpendicularly, the movable tray 1 may be interfered with by the seat of the vehicle. To solve this problem, the movable tray 1 needs to be moved up at a slant in a forward direction.

Accordingly, the housing unit 10 which forms the exterior of the movable tray 1, and a mounting unit 150 of the vehicle refrigerator 100, in which the housing unit 10 is mounted, have a shape that inclines forward.

The outer housing 12 is provided with a rectangular bottom and shaped into a box the upper side of which is open, and has a front surface and a rear surface that inclines forward (the left side in FIG. 2).

The outer housing 12 is provided with a first vent hole part 14 and a second vent hole part 16 that are a passage for air to move. The first vent hole part 14 is a passage in which air passing through the cooling module unit 30 moves. Since the first vent hole part 14 of one embodiment is installed respectively at both sides of the outer housing 12 in the widthwise direction W thereof, the first vent hole part 14 forms a passage in which air for cooling the cooling module unit 30 moves.

The first vent hole part 14 extends in the lengthwise direction D of the housing unit 10, along an edge that is a boundary between a lateral surface and the bottom surface of the housing unit 10, and forms a plurality of holes for air to move.

Since the pair of first vent hole parts 14 is installed at a position where the first vent hole parts 14 face each other, air, which is drawn into a first vent hole part 14 provided at one side of the housing unit 10 in the widthwise direction W thereof, is discharged out of the housing unit 10 through a first vent hole part 14 provided at the other side of the housing unit 10 in the widthwise direction W thereof.

The first vent hole part 14 installed may help to cool the cooling module unit 30 installed at the lower side of the housing unit 10 rapidly and readily, and a path in which air moves is shortened, reducing friction that is caused as air moves.

The second vent hole part 16 is modifiable in various different forms within the technical scope where the second vent hole part 16 forms a plurality of holes in a direction where the cooling unit 140 of the movable body unit 120 is installed. The second vent hole part 16 is formed along an edge that is boundary between the bottom surface and a lateral surface of the housing unit 10, and extends in the widthwise W direction of the housing unit 10.

The second vent hole part 16 forms a passage in which air moves toward the rear (the left side of FIG. 4) of the housing unit 10, and functions as a passage for receiving cold air generated from the cooling unit 140 provided in the vehicle refrigerator 100.

The cover housing 18 is modifiable in various different forms within the technical scope in which the cover housing 18 covers the upper side of the refrigerated storage unit 20 and is fixed to the upper side of the outer housing 12. The cover housing 18 of one embodiment is shaped into a plate covering the upper side of the refrigerated storage unit 20 except for a passage for the beverage container 200 to move. The cover housing 18 is fixed to the housing unit 10 while covering the entrance of an open upper side of the housing unit 10.

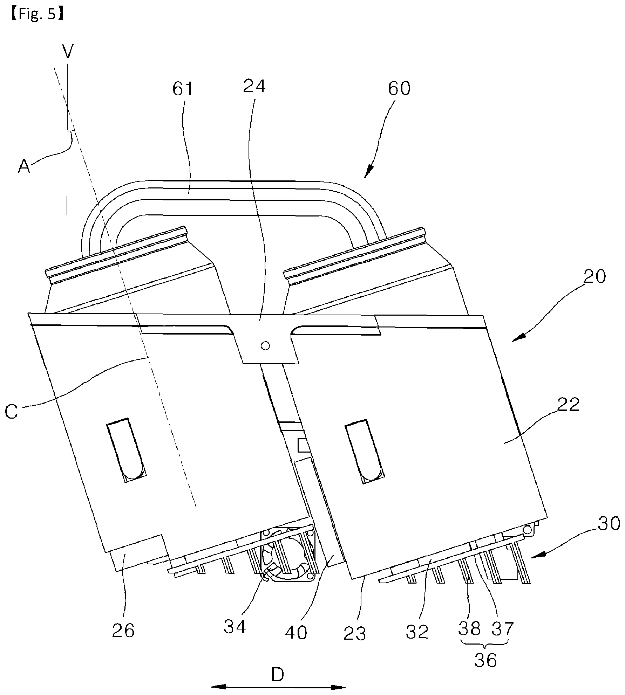

FIG. 5 is a front view showing a refrigerated storage unit 20 and a cooling module unit 30 of one embodiment.

As illustrated in FIG. 3 and FIG. 5, the refrigerated storage unit 20 may be fixed to the inside of the housing unit 10, and modified in various different forms within the technical scope where the refrigerated storage unit 20 is provided with a groove in which the beverage container 200 is mounted. The refrigerated storage unit 20 is cooled by the cooling module unit 30, and made of a material exhibiting high heat conductivity, to cool the beverage container 200 mounted in the refrigerated storage unit 20.

The refrigerated storage unit 20 of one embodiment comprises a container storage unit 22 and a storage connecting unit 24. Additionally, the refrigerated storage unit 20 comprises an inner storage unit 26 installed inside the container storage unit 22.

The container storage unit 22 is shaped into a cylinder the upper side of which is open to accommodate the beverage container 200. The container storage unit 22 may be installed in such a way that a plurality of container storage units 22 is spaced from each other to accommodate a plurality of beverage containers 200.

An angle at which the housing unit 10 inclines with respect to a vertical line V and an angle at which the container storage unit 22 inclines with respect to the vertical line V may be the same. Since the housing unit 10 and the container storage unit 22 are installed in the state where the housing unit 10 and the container storage unit 22 incline, the movable tray 1 or the beverage container 200 may be taken out readily from the vehicle refrigerator 100 installed in a relatively small space.

The container storage unit 22 may be shaped into a circular pipe the lower side of which is closed, and formed in such a way that a material such as metal or aluminum having high heat conductivity is molded.

A central line C of the container storage unit 22 forms an acute angle with respect to the vertical line V and inclines. Under the assumption that an angle formed by the central line C of the container storage unit 22 and the vertical line V is referred to as a first angle A, the first angle A may be greater than 1 degree and less than 40 degrees.

Since the container storage unit 22 in which the beverage container 200 is mounted, and the housing unit 10 incline in one direction, the beverage container 200 or the movable tray 1 is drawn at a slant from the upper side of the movable body unit 120 in the state where the movable body unit 120 moves forward to the outside of a fixed body unit 110, such that the beverage container 200 or the movable tray 1 does not interfere with another component.

The storage connecting unit 24 is modifiable in various different forms within the technical scope where the storage connecting unit 24 connects a plurality of container storage units 22. The storage connecting unit 24 of one embodiment is shaped into a plate that connects the upper sides of the container storage units 22. The storage connecting unit 24 may be formed in such a way that a material the same as a material of the container storage unit 22 is molded, and heat transfer between adjacent container storage units 22 is performed through the storage connecting unit 24.

The heat transfer of the plurality of container storage units 22 is performed through the storage connecting unit 24, such that the beverage container 200 may cool evenly.

The inner storage unit 26 may be mounted inside the container storage unit 22, and installed in such a way that the inner storage unit 26 surrounds the lower side of the beverage container 200. Like the container storage unit 22, the inner storage unit 26 may be made of a material exhibiting high heat conductivity.

The beverage container 200 held in the container storage unit 22 is approximately shaped into a cylinder, and in the case where the outer diameter of the beverage container 200 is less than the inner diameter of the container storage unit 22, the inner storage unit 26 is installed at the lower side of the beverage container 200 such that a shake of the beverage container 200 decreases, and the generation of a gap between the beverage container 200 and the container storage unit 22 is prevented such that heat is transferred readily.

The beverage container 200 may be stored in or drawn from the refrigerated storage unit 20 in the state where the beverage container 200 inclines to one side.

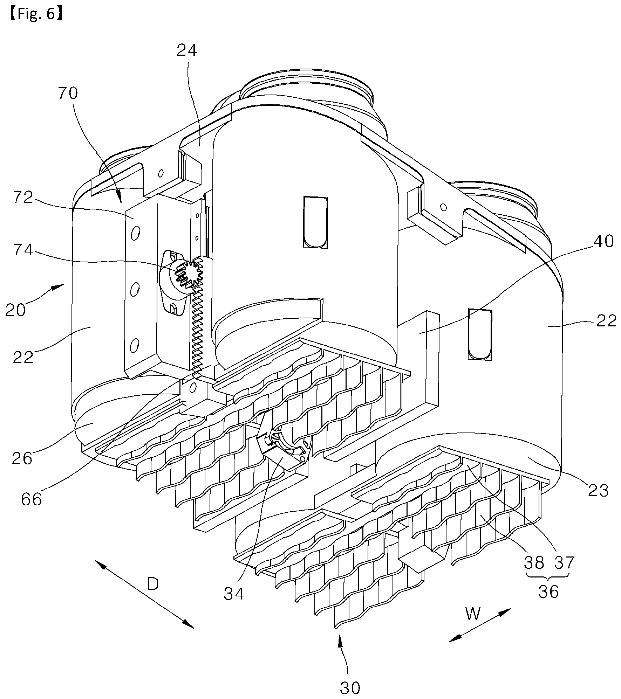

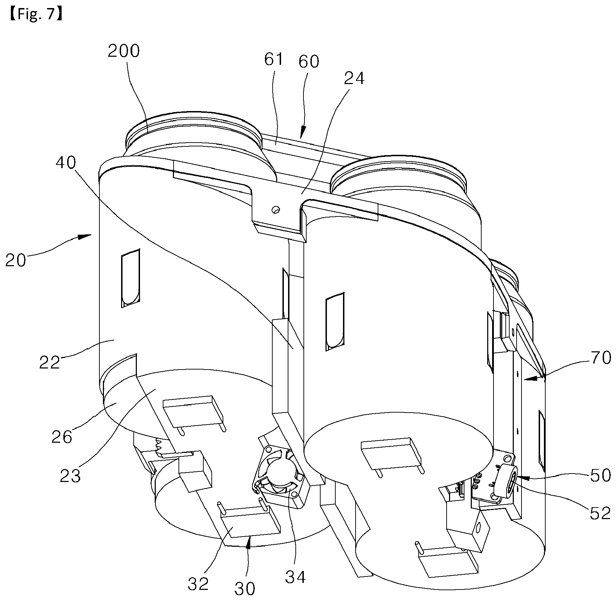

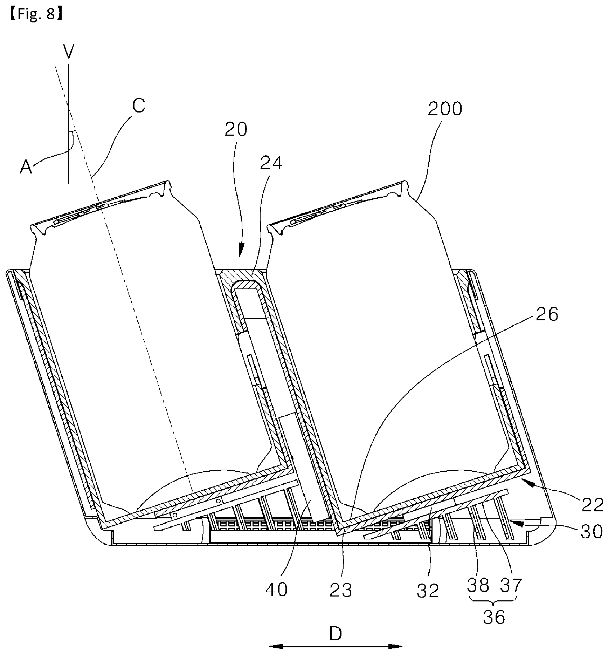

FIG. 6 is a perspective view showing the cooling module unit 30 of one embodiment, FIG. 7 is a perspective view showing the refrigerated storage unit 20 and a cooling element 32 of one embodiment, and FIG. 8 is a cross-sectional view showing the movable tray 1 of one embodiment.

As illustrated in FIG. 6 to FIG. 8, the cooling module unit 30 is installed between the bottom of the refrigerated storage unit 20 and the housing unit 10, and various types of cooling devices may be used within the technical scope where the cooling module unit 30 cools the refrigerated storage unit 20, based on the Peltier effect.

The cooling module unit 30 of one embodiment comprises a cooling element 32, a cooling fan 34, and a first heat dissipating unit 36.

The cooling element 32 is installed in the state of contacting a container lower surface 23 of the container storage unit 22, and is modifiable in various different forms within the technical scope where the cooling element 32 cools the container storage unit 22, based on the Peltier effect.

The cooling element 32 is shaped into a rectangular plate, provided in a number corresponding to the number of the plurality of container storage units 22, and installed in the state of contacting each of the container lower surfaces 23.

The cooling element 32 cools the container lower surface 23 directly, and cools the container storage unit 22 comprising the container lower surfaces 23 made of aluminum.

The cooling fan 34 is installed in succession to the first heat dissipating unit 36, and modifiable in various different forms within the technical scope where the cooling fan 34 guides a flow of air to the first heat dissipating unit 36. The cooling fan 34 of one embodiment is installed at a position where the cooling fan 34 faces the first vent hole part 14. Additionally, since the cooling fan 34 is installed inside the first heat dissipating unit 36, air passing through the first heat dissipating unit 36 may flow smoothly.

The first heat dissipating unit 36 is installed at a position where the first heat dissipating unit 36 and the container storage unit 22 face each other with the cooling element 32 therebetween, and is modifiable in various different forms within the technical scope where the first heat dissipating unit 36 receives heat of the cooling element 32 and exchanges heat with air. The first heat dissipating unit 36 is installed in the state of contacting the lower side of the cooling element 32, and since the first heat dissipating unit 36 exchanges heat with air, reduces the generation of heat of the cooling element 32. The first heat dissipating unit 36 of one embodiment comprises a heat dissipating plate 37, and a heat dissipating fin 38.

The heat dissipating plate 37, together with the container lower surface 23, is installed at a slant, in the state of contacting the lower side of the cooling element 32. The upper side of the cooling element 32 contacts the container lower surface 23, and the lower side of the cooling element 32 contacts the heat dissipating plate 37.

An angle formed between the heat dissipating plate 37 and a horizontal line is the same as the first angle A that is an angle formed between the central line C of the container storage unit 22 and the vertical line V. Additionally, since the bottom of the housing unit 10, disposed at the lower side of the heat dissipating plate 37, extends horizontally, the length of the heat dissipating fin 38 being perpendicular to the heat dissipating plate 37 and protruding to the lower side of the heat dissipating plate 37 increases gradually from one side of the heat dissipating plate 37 toward the other side of the heat dissipating plate 37.

The heat dissipating fin 38 is modifiable in various different forms within the technical scope where the heat dissipating fin 38 protrudes to the lower side of the heat dissipating plate 37 and exchanges heat with air. The heat dissipating fin 38 of one embodiment is installed in a plurality of numbers in such a way that the plurality of heat dissipating fins 38 is installed in succession from one side of the heat dissipating plate 37 to the other side thereof. The heat dissipating fin 38 forms a plurality of rows along the lengthwise direction D of the heat dissipating plate 37. Additionally, the heat dissipating fin 38 is a rectangular plate that form waves, such that a surface area where the heat dissipating fin 38 exchanges heat with air increases.

Since the heat dissipating fin 38 extends in the widthwise direction W of the heat dissipating plate 37 and forms a plate that bends in a wave shape, such that the heat dissipating fin 38 has a greater surface area of contact with air than a planar plate.

Additionally, a length at which the heat dissipating fin 38 protrudes increases from one side of the heat dissipating plate 37 toward the other side thereof. As illustrated in FIG. 5, the height of the heat dissipating plate 37 increases gradually from one side of the heat dissipating plate 37 (the right side of FIG. 5) toward the other side thereof. Further, the length at which the heat dissipating fin 38 protruding to the lower side of the heat dissipating plate 37 protrudes also increases gradually from one side of the heat dissipating plate 37 toward the other side thereof.

A flow of air through the first vent hole part 14 is based on a rotation of the cooling fan 34, and heat exchange between the first heat dissipating unit 36 and air is rapidly performed, such that the heat dissipation of the cooling element 32 is rapidly performed.

The battery unit 40 may be installed between a container storage unit 22 and an adjacent container storage unit 22. The battery unit 40 is installed inside the housing unit 10, and modifiable in various different forms within the technical scope where the battery unit 40 is supplied and charged with an external power source, and when necessary, provides a power storage device supplying a power source to the cooling module unit 30.

The battery unit 40 of one embodiment may use a lithium-ion battery, and may be modified in such a way that two or more battery units are installed in the housing unit 10m and the like.

The power source terminal unit 50 for supplying an external power source to the battery unit 40 is installed in the housing unit 10. The power source terminal unit 50 of one embodiment comprises a first power source terminal 52 and a second power source terminal 54.

The first power source terminal 52 is provided on a lateral surface of the housing unit 10, and is a charging port for receiving an external power source in the case where the movable tray 1 is solely used outside. A USB charging cable may connect to the first power source terminal 52, and an external power source supplied from the first power source terminal 52 may be delivered to the battery unit 40.

Additionally, in the case where the movable tray 1 is held inside the mounting unit 150 of the vehicle refrigerator 100, the second power source terminal 54 is installed on the lower surface of the housing unit 10, to receive a power source through a terminal provided at the mounting unit 150. The second power source terminal 54 forms a terminal for connecting to a pogo pin, on the lower surface of the housing unit 10.

Accordingly, as the movable tray 1 is held inside the mounting unit 150 of the vehicle refrigerator 100, the pogo pin is inserted into and connected to the second power source terminal 54, such that the movable tray 1 is supplied with a power source through the second power source terminal 54.

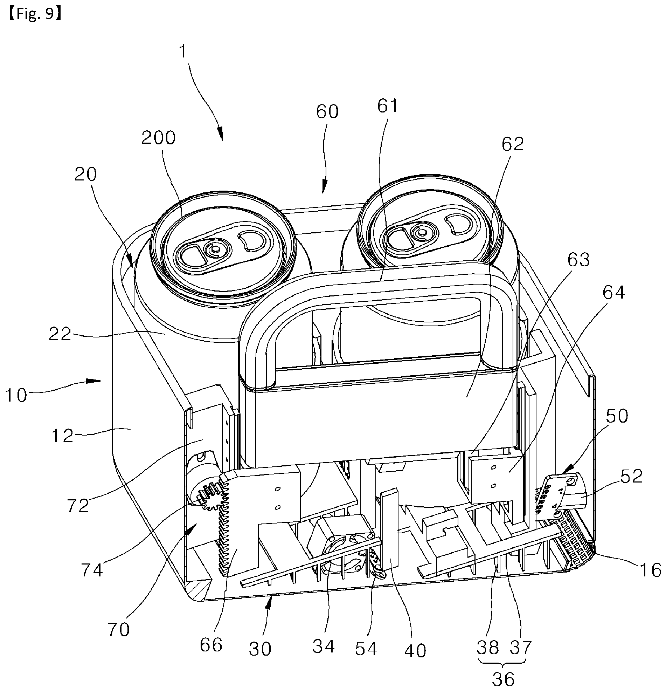

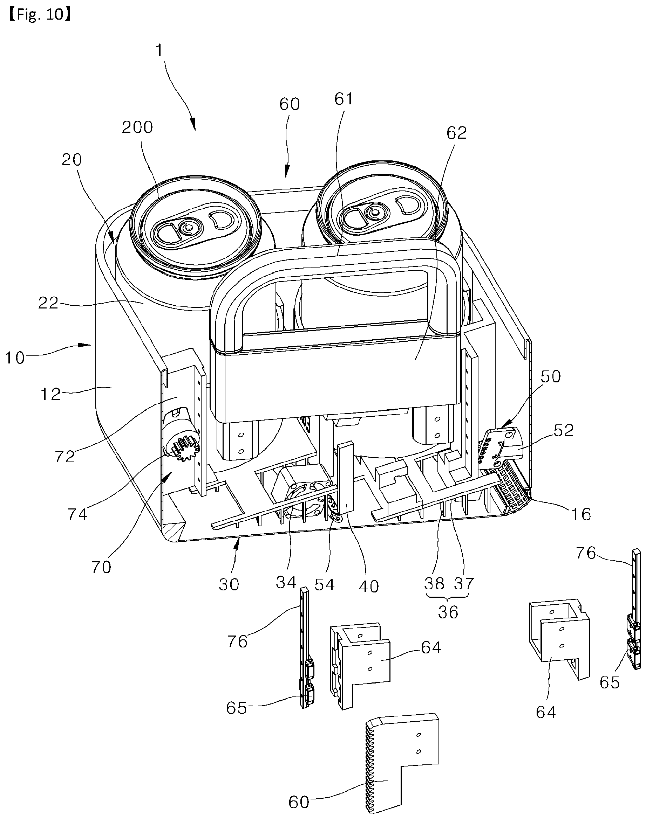

FIG. 9 is a perspective view showing the handle unit 60 of one embodiment, and FIG. 10 is an exploded perspective view showing the handle unit 60 of one embodiment.

As illustrated in FIG. 9 and FIG. 10, the handle unit 60 is fixed to the inside of the housing unit 10, and modifiable in various different forms within the technical scope where the handle unit 60 is provided with a handle that moves in the up-down direction.

An up-down movement of the handle unit 60 is guided by the handle supporter 70 installed inside the housing unit 10, and modifiable in various different forms within the technical scope where the handle unit 60 is gripped with the user's hand. The handle unit 60 of one embodiment comprises a movable handle 61, a handle body 62, a handle projection 63, a handle bracket 64, a movable holder 65, and a gear bracket 66.

The movable handle 61 is installed in such a way that the movable handle 61 of the handle unit 60 is movable in the up-down direction, and the handle unit 60 is installed at a position where the handle unit 60 is spaced from an adjacent refrigerated storage unit 20, to prevent the movable handle 61 from interfering with the beverage container 200, as the movable handle 61 slides.

The movable handle 61 has a " 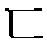 " shape the lower side of which is open, and is gripped by the user's hand. The handle body 62 shaped into a plate connects to the lower side of the movable handle 61. Accordingly, together with the handle body 62, the movable handle 61 moves to the upper side of the housing unit 10 and functions as a handle.

The handle projection 63 is shaped into a projection that protrudes downward from both sides of the handle body 62. The handle bracket 64 is fixed to the outside of the handle projection 63. The handle bracket 64 is installed in such a way that the handle bracket 64 surrounds the outside of the handle projection 63, and the movable holder 65 is fixed to the outside of the handle bracket 64.

The movable holder 65 moves linearly along a guiding rail 76 of the handle supporter 70 described hereinafter, such that the handle unit 60 moves reliably in the up-down direction.

The gear bracket 66 is fixed to a lateral surface of the handle bracket 64, and has a spur gear engaged with a gear damper 74, on a lateral surface thereof.

The handle supporter 70 guiding an up-down movement of the handle unit 60 is fixed to the inside of the housing unit 10. The handle supporter 70 of one embodiment comprises a fixing bracket 72, a gear damper 74 and a guiding rail 76.

The fixing bracket 72 is installed in the state of being fixed to both sides of the handle unit 60 in the lengthwise direction D thereof. The fixing bracket 72 extends along a direction where the handle unit 60 moves, and has the guiding rail 76 on a lateral surface thereof facing the handle unit 60.

Additionally, the gear damper 74 engaged with the gear bracket 66 is installed at the fixing bracket 72. The gear damper 74 is provided with a circular gear, such that the gear damper 74 is engaged with the gear bracket 66 provided with a spur gear and controls a speed at which the gear bracket 66 moves.

### [Vehicle refrigerator]

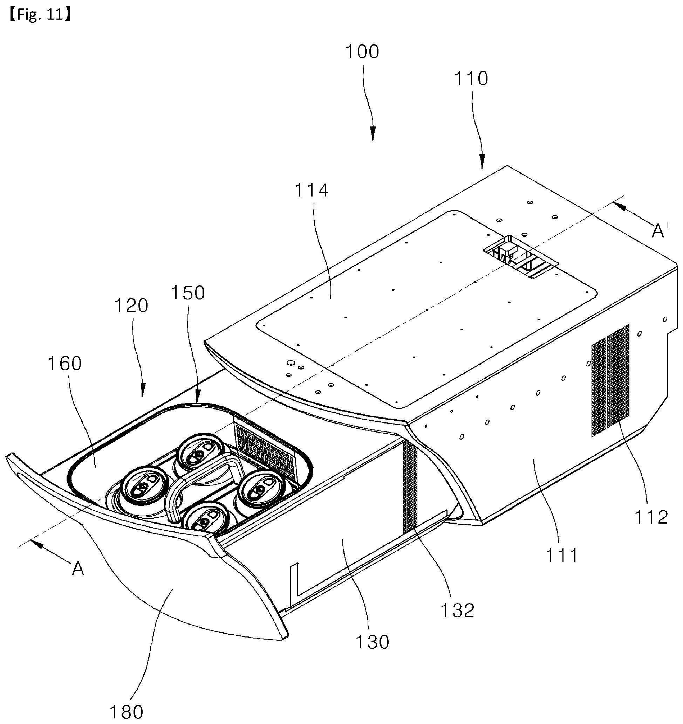

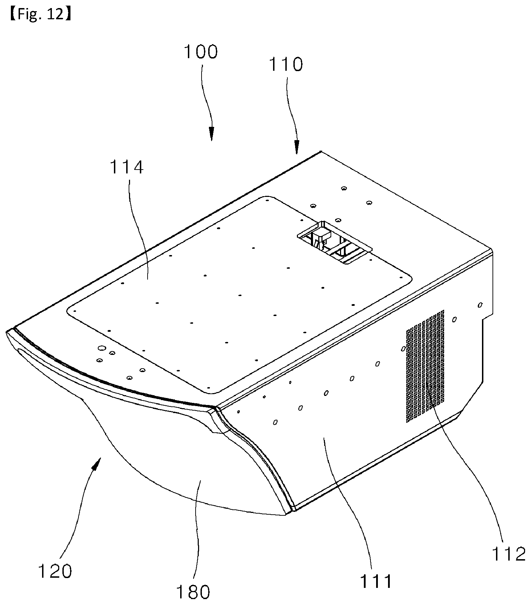

FIG. 11 is a perspective view showing a state in which a movable body unit 120 moves forward from a vehicle refrigerator 100 of one embodiment, and FIG. 12 is a perspective view showing the vehicle refrigerator 100 of one embodiment.

As illustrated in FIG. 11 and FIG. 12, the vehicle refrigerator 100 of one embodiment comprises a fixed body unit 110, a movable body unit 120, a linearly movable unit 190, and a movable tray 1.

A plurality of holes for cold air to move is formed at the movable body unit 120 of the vehicle refrigerator 100, and the movable tray 1 facing the movable body unit 120 also has a plurality of holes for cold air to move, such that cold air moves readily from the movable body unit 120 to the movable tray 1.

The beverage container 200 may be refrigerated in the vehicle refrigerator 100, and may be refrigerated while the beverage container 200 is carried in the case where the movable tray is taken from the vehicle refrigerator 100.

The cooling module unit 30 is installed inside the movable tray 1, and the cooling unit 140 is installed inside the movable body unit 120. The cooling module unit 30 and the cooling unit 140 operate respectively based on the Peltier effect, and in the case where the beverage container 200 is stored in the vehicle refrigerator 100, the cooling unit 140 only operates, and in the case where the beverage container 200 is carried by the movable tray 1, the cooling module unit 30 only operates.

However, in the case where the beverage container 200 needs to be rapidly cooled and the like, the cooling module unit 30 and the cooling unit 140 may operate in such a way that the cooling module unit 30 and the cooling unit 140 operate at the same time, and the like.

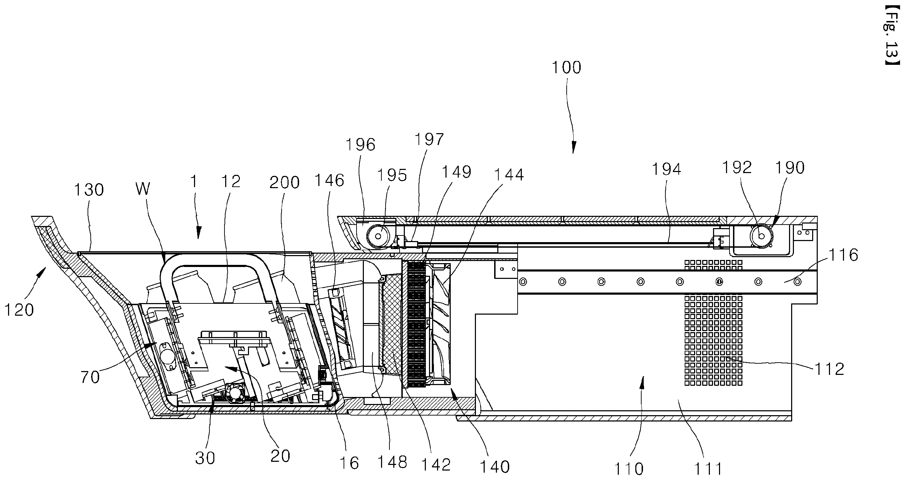

FIG. 13 is a cross-sectional view showing the vehicle refrigerator 100 of one embodiment.

As illustrated in FIG. 11 and 13, the fixed body unit 110 is fixed to a vehicle, and modifiable in various different forms within the technical scope where both sides of the fixed body unit 110 in the lengthwise direction D thereof are open. The fixed body unit 110 of one embodiment comprises a fixed case 111, a service door 114 and a side rail 116.

The fixed case 111 is shaped into a square pipe such that the movable body unit 120 is installed inside the fixed case 111 in a sliding manner.

A first side heat dissipating hole part 112 is provided at both sides of the fixed case 111 in the widthwise direction W thereof. The first side heat dissipating hole part 112 may have a plurality of holes for air to move, and installed at a position where the first side heat dissipating hole part 112 faces a second side heat dissipating hole part 132 provided at the movable body unit 120.

The service door 114 detachably installed at the body of the fixed case 111 is installed at the upper side of the fixed case 111. Accordingly, the service door 114 separates from the fixed case 111, such that the linearly movable unit 190 may be rapidly repaired and managed.

Heat discharged out of the fixed body unit 110 through the first side heat dissipating hole part 112 moves under a seat of a vehicle, minimizing user inconvenience.

The side rail 116 is fixed to the inside of the fixed body unit 110, and shaped into a rail extending along a path in which the movable body unit 120 moves. The side rail 116 is respectively installed at both sides of the fixed body unit 110 in the widthwise direction W thereof.

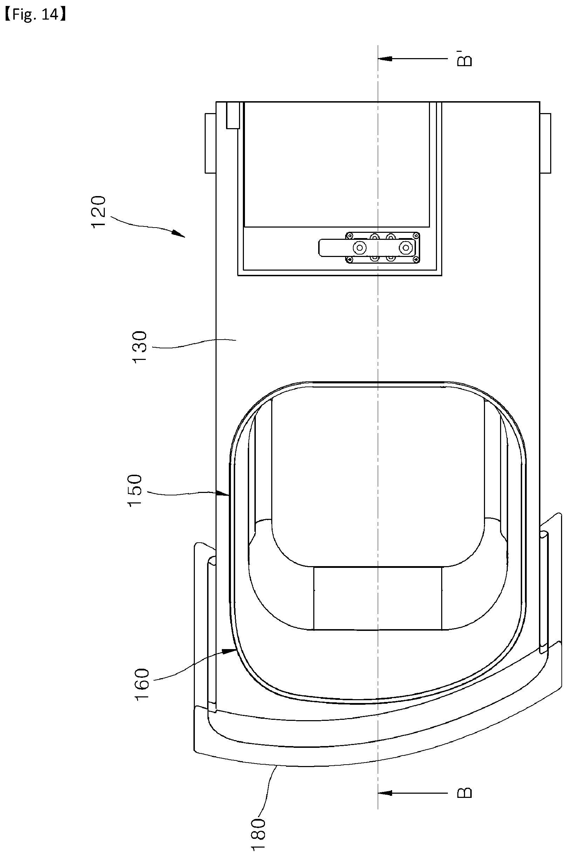

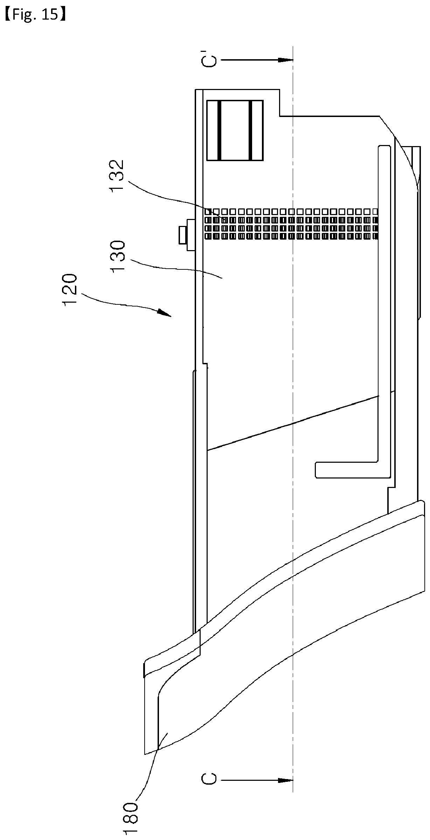

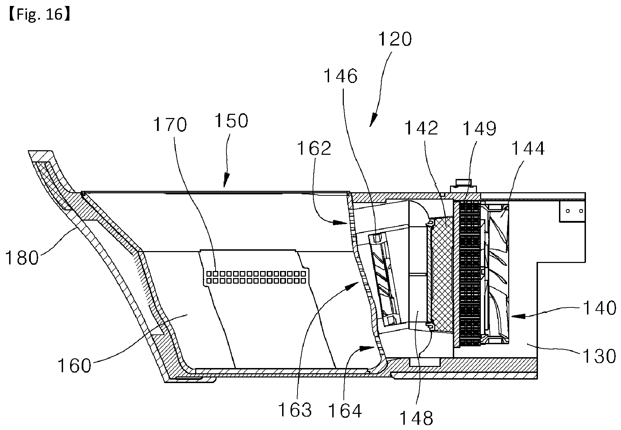

FIG. 14 is a plan view showing the movable body unit 120 of one embodiment, FIG. 15 is a side view showing the movable body unit 120 of one embodiment, and FIG. 16 is a lateral cross-sectional view showing the movable body unit 120 of one embodiment.

As illustrated in FIG. 14 to FIG. 16, the movable body unit 120 is stored inside the fixed body unit 110, or drawn out of the fixed body unit 110 in a sliding manner. Additionally, the movable body unit 120 is modifiable in various different forms within the technical scope where the movable body unit 120 generates cold air and cools the beverage container 200. The movable body unit 120 of one embodiment comprises a movable case 130, a cooling unit 140 and a mounting unit 150.

The movable case 130 is inserted into the fixed case 111, and installed in such a way that the movable case 130 is slidable in the lengthwise direction D of the fixed case 111. For heat to be dissipated easily, the rear side of the movable case 130 is open.

The movable case 130 is shaped into a drawer that is drawn out of the fixed body unit 110, and comprises a second side heat dissipating hole part 132 and a rail holder 134.

The second side heat dissipating hole part 132 is installed at a position where the second side heat dissipating hole part 132 faces the first side heat dissipating hole part 112 in the state where the movable case 130 is stored inside the fixed case 111. The second side heat dissipating hole part 132 is comprised of a plurality of holes for air to move, and air moves through the first side heat dissipating hole part 112 and the second side heat dissipating hole part 132.

The rail holder 134 is installed on a lateral surface of the movable body unit 120, which faces the side rail 116, and moves along the side rail 116, to guide a linear movement of the movable body unit 120.

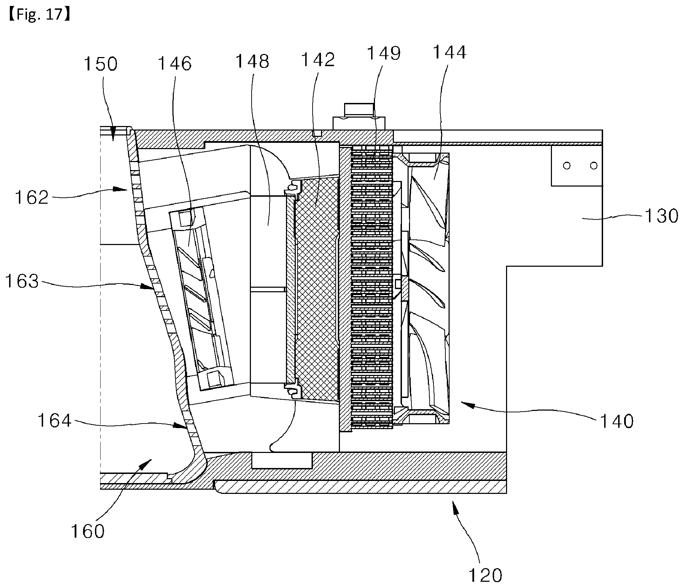

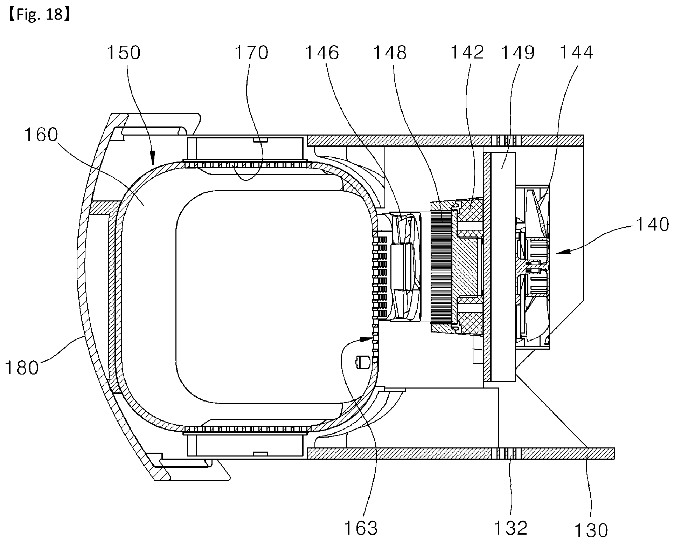

FIG. 17 is a cross-sectional view showing a cooling unit 140 of one embodiment, and FIG. 18 is a planar cross-sectional view showing the movable body unit 120 of one embodiment.

As illustrated in FIG. 17 and FIG. 18, the cooling unit 140 is fixed to the inside of the movable case 130, and modifiable in various different forms within the technical scope where the cooling unit 140 generates cold air by using electric energy to cool the beverage container 200. The cooling unit 140 of one embodiment comprises a thermoelectric module 142, a heat dissipating fan 144, an air blowing fan 146, a second heat dissipating unit 148, and a third heat dissipating unit 149.

The thermoelectric module 142 is disposed at the inner side of the movable case 130, which faces the mounting unit 150, and cools based on the Peltier effect. The thermoelectric module 142 is shaped into a rectangular plate, and is installed in such a way that the thermoelectric module 142 stands. The thermoelectric module 142 is installed in such a way that the thermoelectric module 142 faces the mounting unit 150, and installed at a position where the thermoelectric module 142 faces a second side hole part 163.

The second heat dissipating unit 148 is installed at the front (the left side of FIG. 17) of the thermoelectric module 142, and the third heat dissipating unit 149 is installed at the rear (the right side of FIG. 17) of the thermoelectric module 142.

The second heat dissipating unit 148 is disposed between the mounting unit 150 and the thermoelectric module 142, and receives heat of the thermoelectric module 142 and exchanges heat with air. A plurality of cooling plates is installed at the second heat dissipating unit 148 and the third heat dissipating unit 149 to increase a surface area of contact with air.

The third heat dissipating unit 149 is installed at a position where the third heat dissipating unit 149 and the second heat dissipating unit 148 face each other with the thermoelectric module 142 therebetween, and receives heat of the thermoelectric module 142 to induce heat exchange with air.

The heat dissipating fan 144 is installed in succession to the rear of the third heat dissipating unit 149, and functions as a fan moving air toward the third heat dissipating unit 149.

The air blowing fan 46 is disposed between the second heat dissipating unit 148 and the mounting unit 150, and functions as a fan moving air from the mounting unit 150 to the second heat dissipating unit 148.

As the air blowing fan 146 operates, air inside the mounting unit 150 is moved to the second heat generating unit through the second side hole part 164 and cooled, and then moved again to the inside of the mounting unit 150 through the first side hole part 162 and the third side hole part 164, to provide cold air.

In particular, air having moved to the lower side of the mounting unit 150 through the third side hole part 164 is moved to the inside of the movable tray 1 through the second vent hole part 16 provided at the movable tray 1, and cools the beverage container 200 mounted in the refrigerated storage unit 20.

Additionally, air having moved through the first side hole part 162 cools the upper side of the beverage container 200 held in the movable tray 1.

Further, as the heat dissipating fan 144 operates, the heat dissipating fan 144 suctions air through an open rear side of the movable body unit 120, supplies air toward the third heat dissipating unit 149 and pulls down the temperature of the third heat dissipating unit 149, and then heat is discharged out of the vehicle refrigerator 100 by consecutively passing through the first side heat dissipating hole part 112 and the second side heat dissipating hole part 132.

In the case where the beverage container 200 needs to be cooled rapidly, the beverage container 200 is cooled by cold air generated respectively from the vehicle refrigerator 100 and the movable tray 1, leading to a decrease in the time taken to cool the beverage container 200.

The mounting unit 150 forms a concave groove in which the movable tray 1 is mounted, at the upper side of the movable case 130, and forms a space with which cold air generated by the cooling unit 140 is supplied. The upper side of the mounting unit 150 is open, and the mounting unit 150 is installed at a position where the mounting unit 150 faces the cooling unit 140.

The mounting unit 150 of one embodiment comprises a mounting case 160 and a lighting unit 170.

The mounting case 160 is disposed inside the movable case 130, and forms a groove that is concave upward to store the movable tray 1. Additionally, the mounting case 160 is provided with a plurality of holes through which air moves, to receive cold air generated from the cooling unit 140 or form a passage in which air moves for heat exchange.

The mounting unit 150 is shaped into a vessel the upper side of which is open, and has a first side hole part 162, a second side hole part 163 and a third side hole part 164 on a lateral surface thereof, which faces the cooling unit 140. The second side hole part 163 is installed at the lower side of the first side hole part 162, and the third side hole part 164 is installed at the lower side of the second side hole part 163.

The second side hole part 163 forms a plurality of holes at a position where the second side hole part 163 faces the cooling unit 140, and forms a passage for air inside the mounting case 160 to move to the cooling unit 140. The second side hole part 163 is formed in such a way that the plurality of holes is installed in a strap shape along the horizontal direction, such that air moves readily.

The first side hole part 162 forms a plurality of holes at the upper side of the second side hole part 163, and forms a passage for air cooled in the cooling unit 140 to move to the inside of the mounting case 160.

The third side hole part 164 forms a plurality of holes at the lower side of the second side hole part 163, and forms a passage for air cooled in the cooling unit 140 to move to the inside of the mounting case 160.

The lateral surface of the mounting case 160, on which the first side hole part 162, the second side hole part 163 and the third side hole part 164 are installed, is installed at a slant toward the inside of the mounting case 160. The movable tray 1 is inserted and mounted in the mounting unit 150 at a slant, and since the movable tray 1 is moved up from the mounting unit 150 at a slant in an oblique direction, the front surface and the rear surface of the mounting unit 150 are also installed at a slant.

Since cold air generated from the cooling unit 140 of the movable body unit 120 is transferred to the movable tray 1 through a plurality of holes to cool the beverage container 200, time taken to cool the beverage container 200 may decrease.

The lighting unit 170 is installed at both sides of the mounting unit 150 in the widthwise direction W thereof, and generates light of a set color. In the case where the lighting unit 170 operates in the state where the movable tray 1 is mounted in the mounting unit 150, the lighting unit 170 provides a dim light source through a gap between the movable tray 1 and the mounting case 160.

A front surface cover 180 is installed on the front surface of the movable case 130. The front surface cover 180 has a variety of shapes such as a curved surface that is the same as the shape of the lower side of a sheet.

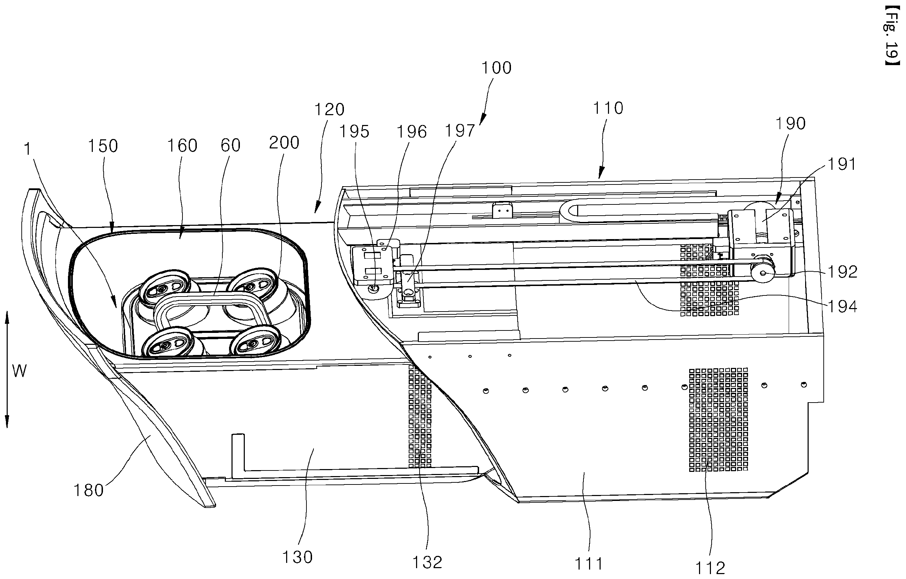

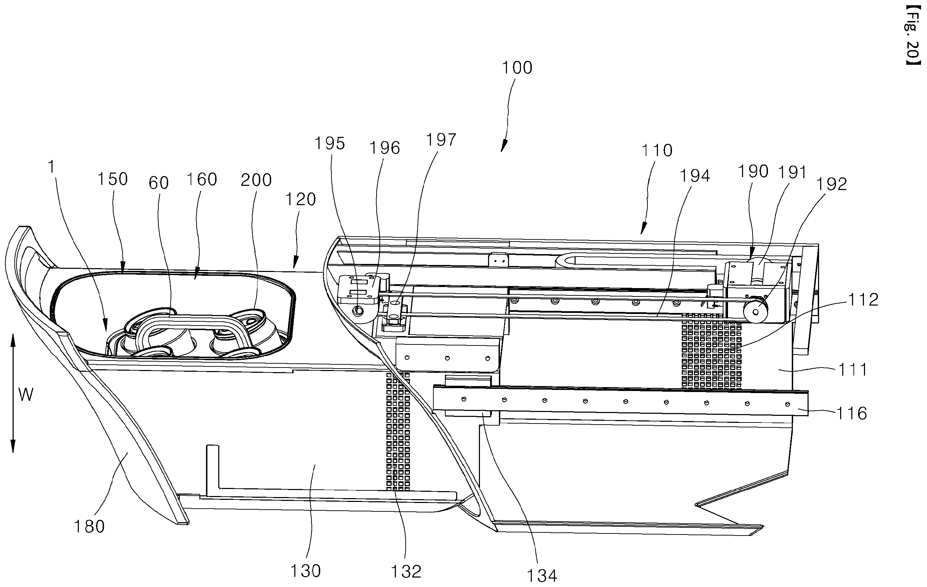

FIG. 19 is a perspective view showing a linearly movable unit 190 of one embodiment, and FIG. 20 is a perspective view showing a side rail 116 and a rail holder 134 of one embodiment.

As illustrated in FIG. 19 and FIG. 20, the linearly movable unit 190 connects to the fixed body unit 110 and the movable body unit 120, and is modifiable in various different forms within the technical scope where the linearly movable unit 190 provides power of moving the movable body unit 120 to the outside of the fixed body unit 110 by using electric energy. The linearly movable unit 190 of one embodiment comprises a driving motor 191, a driving gear 192, a belt member 194, a driven gear 195, a gear supporter 196 and a belt fixing unit 197.

The driving motor 191 is fixed to the fixed body unit 110 and generates rotational power by using electric energy. The driving motor 191 may use a servomotor. The driving gear 192 connects to the output shaft/axis of the driving motor 191. The driving gear 192 is a circular gear, and rotates based on the operation of the driving motor 191.

One side of the belt member 194 is held at the driving gear 192, and as the driving gear 192 rotates, moved to transfer power. The belt member 194 of one embodiment may use a timing belt to transfer power accurately.

The driven gear 195 is rotatably installed at a position where the driven gear 195 is spaced from the driving gear 192, and connects to the belt member 194 to rotate together with the belt member 194. A gear engaged with the timing belt may be formed outside the driven gear 195. The gear supporter 196 is fixed to the fixed main body 110, and rotatably supports the driven gear 195.

The belt fixing unit 197 is fixed to the movable body unit 120 and the belt member 194, and modifiable in various different forms within the technical scope where the belt fixing member 197 together with the belt member 194 moves the movable body unit 120. The belt fixing member 197 of one embodiment comprises two fixing pieces, and a lower fixing piece is fixed to the upper side of the movable body unit 120, and an upper fixing piece is fixed to the lower fixing piece with the belt member 194 between the upper fixing piece and the lower fixing piece.

Thus, as the belt member 194 moves, the belt fixing unit 197 moves the movable body unit 120 while moving together with the belt member 194.

In the state where the movable tray 1 is stored in the mounting unit 150 of the vehicle refrigerator 100 as described above, a plurality of beverage containers 200 may be mounted in the movable tray 1. Cold air generated based on the operation of the cooling unit 140 of the vehicle refrigerator 100 is transferred to the movable tray 1 and the beverage container 200 that are mounted in the mounting unit 150, to cool the beverage container 200.

At this time, the movable tray 1 receives a power source through the second power source terminal 54 and charges the battery unit 40.

In the case where the movable tray 1 is taken out of the vehicle refrigerator 100 when a vehicle stops or when necessary, the cooling module unit 30 provided in the movable tray 1 operates to cool the beverage container 200. As described above, the beverage container 200 is refrigerated inside and outside a vehicle, ensuring improvement in user satisfaction.

Further, since a space in which the vehicle refrigerator 100 is installed, under a seat of a vehicle, is relatively small, in the case where the movable tray 1 is moved up perpendicularly in the state where the movable body unit 120 is opened, the movable tray 1 may be interfered with by the seat of the vehicle.

To solve the problem, provided is a structure in which the beverage container 200 and the movable tray 1 are moved in an oblique direction and drawn out of the vehicle refrigerator 100, ensuring ease of withdrawal of the beverage container 200 and the movable tray 1 even in a small space.

The embodiments are described above with reference to a number of illustrative embodiments thereof. However, embodiments are not limited to the embodiments and drawings set forth herein, and numerous other modifications and embodiments may be drawn by one skilled in the art within the technical scope of the disclosure. Further, the effects and predictable effects based on the configurations in the disclosure are to be included within the range of the disclosure though not explicitly described in the description of the embodiment.

## Claims

1. A movable tray, comprising:
a housing unit provided with a passage in which air moves for heat exchange;
a refrigerated storage unit which is fixed to an inside of the housing unit and in which a beverage container is mounted;
a cooling module unit installed between a bottom of the refrigerated storage unit and the housing unit, and configured to cool the refrigerated storage unit based on a Peltier effect; and
a battery unit installed inside the housing unit, and configured to provide a power source to the cooling module unit,
wherein the beverage container is stored in or drawn from the refrigerated storage unit in a state where the beverage container is inclined.

2. The movable tray of claim 1, the housing unit, comprising:
an outer housing having an upper side which is open, and in which the refrigerated storage unit and the cooling module unit and the battery unit are installed; and
a cover housing configured to cover an upper side of the refrigerated storage unit and fixed to the upper side of the outer housing,
the outer housing has a first vent hole part that is a passage through which air for cooling the cooling module unit moves, respectively at both sides of the outer housing in a widthwise direction of the outer housing.

3. The movable tray of claim 1, the refrigerated storage unit, comprising:
a container storage unit shaped into a cylinder, an upper side of which is open to store the beverage container, and
a storage connecting unit configured to connect the container storage unit provided in a plurality of numbers,
wherein a central line of the container storage unit forms an acute angle with respect to a vertical line, and is installed in an inclined shape.

4. The movable tray of claim 3, the cooling module unit, comprising:
a cooling element installed in contact with a container lower surface of the container storage unit, and configured to cool the container storage unit based on the Peltier effect;
a first heat dissipating unit installed at a position where the first heat dissipating unit and the container storage unit face each other with the cooling element therebetween, and configured to receive heat of the cooling element and to induce heat exchange with air; and
a cooling fan installed in succession to the first heat dissipating unit, and configured to guide a flow of air toward the first heat dissipating unit.

5. The movable tray of claim 4, the first heat dissipating unit, comprising:
a heat dissipating plate installed at a slant, in contact with a lower side of the cooling element, together with the container lower surface; and
a heat dissipating fin configured to protrude to a lower side of the heat dissipating plate, and to exchange heat with air,
wherein the heat dissipating fin is installed in a plurality of numbers, the plurality of heat dissipating fins is installed in succession from one side of the heat dissipating plate to the other side thereof, and a length at which the heat dissipating fin protrudes increases gradually from one side of the heat dissipating plate to the other side thereof.

6. The movable tray of claim 1, further comprising:
a handle unit fixed to the inside of the housing unit, and provided with a handle moving in an up-down direction.

7. A vehicle refrigerator, comprising:
a fixed body unit fixed to a vehicle, and configured to have a shape in which both sides of the fixed body unit are open in a lengthwise direction thereof;
a movable body unit stored inside the fixed body unit or drawn out of the fixed body unit in a sliding manner, and configured to generate cold air and to cool a beverage container; and
a movable tray in which a plurality of beverage containers is mounted at a slant, which is detachably installed at the movable body unit, and which generates cold air cooling the beverage container and cools the beverage container.

8. The vehicle refrigerator of claim 7, the fixed body unit, comprising:
a fixed case which is shaped into a square pipe, and in which the movable body unit is slidably installed; and
a first side heat dissipating hole part comprised of a plurality of holes for air to move, at both sides of the fixed case in a widthwise direction thereof.

9. The vehicle refrigerator of claim 8, the movable body unit, comprising:
a movable case inserted into the fixed case, and moved in a lengthwise direction of the fixed case;
a second side heat dissipating hole part configured to form a hole for air to move, at the movable case installed at a position where the movable case faces the first side heat dissipating hole part, in a state where the movable case is stored inside the fixed case;
a cooling unit fixed to an inside of the movable case, and configured to generate cold air by using electric energy; and
a mounting unit configured to form a concave groove for mounting the movable tray, at an upper side of the movable case, and to receive cold air generated from the cooling unit.

10. The vehicle refrigerator of claim 9, the cooling unit, comprising:
a thermoelectric module disposed at an inner side of the movable case, facing the mounting unit, and cooled based on a Peltier effect;
a second heat dissipating unit disposed between the mounting unit and the thermoelectric module, and configured to receive heat of the thermoelectric module and to induce heat exchange with air;
a third heat dissipating unit installed at a position where the third heat dissipating unit and the second heat dissipating unit face each other with the thermoelectric module therebetween, and configured to receive heat of the thermoelectric module and to induce heat exchange with air;
an air blowing fan disposed between the second heat dissipating unit and the mounting unit, and configured to move air form the mounting unit toward the second heat dissipating unit; and
a heat dissipating fan installed in succession to the third heat dissipating unit, and configured to move air toward the third heat dissipating unit.

11. The vehicle refrigerator of claim 9, the mounting unit, comprising:
a mounting case disposed inside the movable case, and configured to form a groove that is concave upward to accommodate the movable tray,
wherein the mounting case is provided with a plurality of holes for receiving cold air generated from the cooling unit.

12. The vehicle refrigerator of claim 11, the mounting case, comprising:
a second side hole part configured to form a plurality of holes at a position where the mounting case faces the cooling unit, and to form a passage for air inside the mounting case to move to the cooling unit;
a first side hole part configured to form a plurality of holes at an upper side of the second side hole part, and to form a passage for air cooled in the cooling unit to move to an inside of the mounting case; and
a third side hole part configured to form a plurality of holes at a lower side of the second side hole part, and to form a passage for air cooled in the cooling unit to move to the inside of the mounting case.

13. The vehicle refrigerator of claim 7, further comprising:
a linearly movable unit configured to connect to the fixed body unit and the movable body unit, and to move the movable body unit to an outside of the fixed body unit by using electric energy.

14. The vehicle refrigerator of claim 13, the linearly movable unit, comprising:
a driving motor fixed to the fixed body unit, and configured to generate rotational power by using electric energy;
a driving gear configured to connect to the driving motor and to rotate based on an operation of the driving motor;
a belt member held at the driving gear, and configured to move based on a rotation of the driving gear;
a driven gear rotatably installed at a position where the driven gear is spaced from the driving gear, and configured to connect to the belt member; and
a belt fixing unit fixed to the movable body unit and the belt member, and configured to move the movable body unit, together with the belt member.

15. The vehicle refrigerator of claim 7, comprising:
a side rail fixed to an inside of the fixed body unit, and configured to extend along a path in which the movable body unit moves; and
a rail holder installed on a lateral surface of the movable body unit, which faces the side rail,
and configured to move along the side rail.

16. The vehicle refrigerator of claim 7, the movable tray, comprising:
a housing unit provided with a passage in which air moves for heat exchange;
a refrigerated storage unit which is fixed to an inside of the housing unit, and in which a beverage container is mounted;
a cooling module unit installed between a bottom of the refrigerated storage unit and the housing unit, and configured to cool the refrigerated storage unit based on a Peltier effect; and
a battery unit installed inside the housing unit, and configured to supply a power source to the cooling module unit.

17. The vehicle refrigerator of claim 16, the housing unit, comprising:
an outer housing which is a case an upper side of which is open, and in which the refrigerated storage unit and the cooling module unit and the battery unit are installed;
a cover housing configured to cover an upper side of the refrigerated storage unit, and fixed to the upper side of the outer housing,
the outer housing, comprising:
a first vent hole part as a passage for air for cooling the cooling module unit to move installed respectively at both sides of the outer housing in a widthwise direction thereof; and
a second vent hole part configured to form a plurality of holes in a direction where a cooling unit of the movable body unit is installed.

18. The vehicle refrigerator of claim 16, the refrigerated storage unit, comprising:
a container storage unit shaped into a cylinder an upper side of which is open to accommodate the beverage container;
a storage connecting unit configured to connect the container storage unit provided in a plurality of numbers,
wherein a central line of the container storage unit is installed at a slant while forming an acute angle with respect to a vertical line.

19. The vehicle refrigerator of claim 18, the cooling module unit, comprising:
a cooling element installed in contact with a container lower surface of the container storage unit, and configured to cool the container storage unit based on the Peltier effect;
a first heat dissipating unit installed at a position where the first heat dissipating unit and the container storage unit face each other with the cooling element therebetween, and configured to receive heat of the cooling element and to induce heat exchange with air; and
a cooling fan installed in succession to the first heat dissipating unit, and configured to guide a flow of air toward the first heat dissipating unit.

20. The vehicle refrigerator of claim 19, the first heat dissipating unit, comprising:
a heat dissipating plate installed in contact with a lower side of the cooling element, at a slant, together with the container lower surface; and
a heat dissipating fin configured to protrude to a lowed side of the heat dissipating plate, and to exchange heat with air,
wherein the heat dissipating fin is installed in a plurality of numbers in such a way that the plurality of heat dissipating fins are installed in succession from one side of the heat dissipating plate to the other side thereof, and
a length at which the heat dissipating fin protrudes increases gradually from one side of the heat dissipating plate toward the other side thereof.
